# EUROPEAN PATENT APPLICATION

(11) **EP 4 730 198 A1**
(43) Date of publication of application: **22.04.2026**
(21) Application number: 25827180.8
(22) Date of filing: 30.05.2025
(51) Int. Cl.: G06N 3/042, G06N 3/047, G06N 3/09, G06N 3/092

(54) **METHOD FOR GENERATING TRAINING DATA AND METHOD FOR TRAINING COMBINATORIAL OPTIMIZATION MODEL BY USING SAME**

(30) Priority: 24.06.2024 KR 20240082165; 16.01.2025 KR 20250006852
(71) Applicant: LG Management Development Institute Co., Ltd., Seoul 07336 (KR)
(72) Inventor: LEE, Kyung Hyun, Seoul 08831 (KR); PARK, Young Joon, Seoul 07946 (KR); JEONG, Han Seul, Seoul 07576 (KR); YOO, Sung Dong, Seoul 07794 (KR); SONG, Hyung Seok, Seoul 07794 (KR); LIM, Woo Hyung, Seoul 06004 (KR)
(74) Representative: BCKIP Part mbB
(86) International application number: PCT/KR2025/007507
(87) International publication number: WO 2026/005317

(57) **Abstract**

The present disclosure relates to a method of generating training data and a method of training a combinatorial optimization model using the same. More specifically, the present disclosure relates to a method of generating training data for learning a Steiner tree problem (STP) and training a combinatorial optimization model using the generated training data.

## Description

### [Technical Field]

The present disclosure relates to a method of generating training data and a method of training a combinatorial optimization model using the same. More particularly, the present disclosure relates to a method of generating training data for learning a Steiner tree problem (STP) and training a combinatorial optimization model using the generated training data.

### [Background Art]

A Steiner tree problem (STP) is an NP-hard combinatorial optimization problem with various applications. More specifically, the Steiner tree problem, which is one of the major areas in the field of combinatorial optimization (CO), is a combinatorial optimization problem that aims at finding a minimum-cost tree including all nodes designated as terminals among nodes in a graph.

Solving the Steiner tree problem is essential for minimizing costs and resources while optimizing connections between various objects or locations. For example, the Steiner tree problem has been utilized in various industrial fields, such as printed circuit board (PCB) design, circuit design, network design, facility layout, and image processing.

Meanwhile, in recent research on artificial intelligence (in particular, neural combinatorial optimization (NCO)), there has been active research on problems such as the traveling salesman problem (TSP), the capacitated vehicle routing problem (CVRP), and the maximum independent set (MIS).

However, learning-based research on the Steiner tree problem has been relatively neglected compared to other combinatorial optimization fields. This is due to the lack of large-scale datasets required for a supervised learning (SL)-based neural combinatorial optimization algorithm, or the lack of environments (e.g., Markov decision process (MDP) environment) required for a reinforcement learning (RL)-based neural combinatorial optimization algorithm.

Furthermore, in the Steiner tree problem, minor variations in the solution space may significantly affect the overall optimization outcome. Therefore, there remains a need for methods for solving the Steiner tree problem.

### [Disclosure]

### [Technical Problem]

The present disclosure is directed to providing a method of generating training data for learning a Steiner tree problem (STP).

More specifically, the present disclosure is directed to providing a method of generating a large-scale dataset for learning and evaluating a Steiner tree problem.

Furthermore, the present disclosure is directed to providing a large-scale, high-quality dataset that can be universally utilized in various learning environments.

More specifically, the present disclosure is directed to providing a large-scale dataset and environment capable of solving a Steiner tree problem.

Furthermore, the present disclosure is directed to providing a combinatorial optimization model that can be universally utilized in various industries and services.

More specifically, the present disclosure provides a method of training a combinatorial optimization model capable of solving a Steiner tree problem and generating an optimal solution.

### [Technical Solution]

According to an aspect of the present disclosure, a method of generating training data for learning a Steiner tree problem includes generating a graph based on a plurality of graph types and parameters until nodes in the graph are connected by edges, generating an instance of the Steiner tree problem by adding the generated graph to a dataset, deriving an optimal solution to the instance using a specific solver, and constructing a dataset including the instance and the optimal solution.

In the generating of the graph, when there is a separated node, the graph may be iteratively generated so that the nodes are connected in all graphs.

The graph may be generated based on the number of instances.

The node in the graph may be selected as a terminal based on a predetermined probability, and a cost of the edges may be assigned as a random integer from a truncated Gaussian distribution.

The graph, the terminal, and the cost of the edge may be grouped in the instance and included in the dataset.

A connection scheme of the edge may vary depending on the plurality of graph types.

A graph corresponding to at least one of the plurality of graph types may be generated by sampling an edge generation probability from a uniform distribution, sampling a degree of the graph, or sampling an average node degree.

The plurality of graph types may include a type different from at least one of the graph types, and the different type of graph may be generated with the cost of the edge fixed.

According to another aspect of the present disclosure, a method of training a combinatorial optimization model (neural combinatorial optimization) for solving a Steiner tree problem includes generating a graph based on a plurality of graph types and parameters until nodes in the graph are connected by edges, generating an instance of the Steiner tree problem by adding the generated graph to a dataset, deriving an optimal solution to the instance using a specific solver, and constructing a dataset including the instance and the optimal solution, and training at least one of combinatorial optimization models using the constructed dataset.

In the generating of the graph, when there is a separated node, the graph may be iteratively generated so that the nodes are connected in all graphs.

The graph may be generated based on the number of instances.

The node in the graph may be selected as a terminal based on a predetermined probability, and a cost of the edges may be assigned as a random integer from a truncated Gaussian distribution.

The graph, the terminal, and the cost of the edge may be grouped in the instance and included in the dataset.

The combinatorial optimization model may include at least one of a supervised learning model and a reinforcement learning model.

The supervised learning model and the reinforcement learning model may each be classified into a plurality of model types based on autoregressive and non-autoregressive characteristics.

The method may further include performing inference on the Steiner tree problem using an artificial intelligence model having the non-autoregressive characteristics among the reinforcement learning models.

In the training, any one of the combinatorial optimization models may be selected based on a size of the graph, and the selected combinatorial optimization model may be trained using the constructed dataset..

**The program according to the present invention** is executed by one or more processes in an electronic device and is storable in a computer-readable recording medium, and may include instructions for performing: generating a graph based on a plurality of graph types and parameters until nodes of the graph are connected by edges; generating an instance for a Steiner Tree Problem by adding the generated graph to a data set; deriving an optimal solution for the instance by using a specific solver; and constructing a data set including the instance and the optimal solution.

### [Advantageous Effect]

As described above, according to the method of generating training data and the method of training a combinatorial optimization model using the same, by generating the large-scale dataset that includes various scenarios such as the graphs, the number of terminal nodes, the data sizes, and the edge distributions, it is possible to provide the environment in which the artificial intelligence model may interact with various scenarios and may be trained.

In addition, according to the method of generating training data and the method of training a combinatorial optimization model using the same according to the present disclosure, by providing the dataset or learning environment that can be universally utilized in various learning environments, it is possible to provide the optimal environment in which various types of models with respectively different characteristics may learn the Steiner tree problem (STP).

Furthermore, according to the method of generating training data and the method of training a combinatorial optimization model using the same according to the present disclosure, by constructing the large-scale, high-quality dataset that can be utilized in various learning environments and training the artificial intelligence models using the constructed dataset, it is possible to improve the generalization performance of the artificial intelligence model that solves the Steiner tree problem.

In addition, according to the method of generating training data and the method of training combinatorial optimization model using the same according to the present disclosure, by selectively training the artificial intelligence model according to the size of the graph included in the dataset, it is possible to minimize the costs and resource usage required for the model training and inference and to universally respond to various sizes of graphs. As a result, it is possible to provide the optimal solutions tailored to various sizes of graphs and maximize the performance and efficiency by utilizing the strengths of each model.

Furthermore, according to the method of generating training data and the method of training combinatorial optimization model using the same according to the present disclosure, by training the combinatorial optimization model using the constructed dataset so as to reinforce the expressiveness for the partial solutions, it is possible to solve the Steiner tree problem that relies on the partial solution information and significantly improve the potential of utilization in the combinatorial optimization model. As a result, it is possible for the combinatorial optimization model to alleviate smoothing issues and derive more accurate solutions on the large-scale instances.

That is, according to the method of generating training data and the method of training a combinatorial optimization model using the same according to the present disclosure, by providing the large-scale dataset including accurate optimal solutions and the learning environment, it is possible to provide the environment capable of solving the complex combinatorial optimization problems in various industries, services, researches, etc.

### [Description of Drawings]

FIG. 1 is a conceptual diagram for describing a combinatorial optimization system according to the present disclosure.
FIG. 2 is a conceptual diagram for describing a tree structure.
FIG. 3 is a diagram for comparing and describing a traveling salesman problem and a Steiner tree problem.
FIGS. 4A and 4B are flowcharts for describing a method of generating training data according to the present disclosure.
FIGS. 5 to 10 are conceptual diagrams for describing a method of generating training data according to the present disclosure.
FIGS. 11 to 19 are formulas for describing a method of generating training data and a method of training a combinatorial optimization model using the same according to the present disclosure.

### [Mode for Disclosure]

Hereafter, embodiments disclosed in the present specification will be described in detail with reference to the accompanying drawings and the same or similar components are given the same reference numerals regardless of the reference numbers of figures and are not repeatedly described. In addition, terms "module" and "unit" for components used in the following description are used only to easily make the disclosure. Therefore, these terms do not have meanings or roles that distinguish from each other in themselves. Further, when it is determined that a detailed description for the related known art in describing embodiments disclosed in the present specification may obscure the gist of the present disclosure, a detailed description thereof will be omitted. Further, it should be understood that the accompanying drawings are provided only in order to allow embodiments disclosed in the present specification to be easily understood, and the spirit of the present disclosure is not limited by the accompanying drawings, but includes all the modifications, equivalents, and substitutions included in the spirit and the scope of the present disclosure.

Terms including ordinal numbers such as "first", "second", etc., may be used to describe various components, but the components are not to be construed as being limited to the terms. The terms are used to distinguish one component from another component.

It is to be understood that when one element is referred to as being "connected to" or "coupled to" another element, it may be connected directly to or coupled directly to another element or be connected to or coupled to another element, having the other element intervening therebetween. On the other hand, it should be understood that when one element is referred to as being "connected directly to" or "coupled directly to" another element, it may be connected to or coupled to another element without the other element interposed therebetween.

Singular expressions are intended to include plural expressions unless the context clearly represents otherwise.

It will be further understood that terms "include", "have", or the like used in the present specification specify the presence of features, numerals, steps, operations, components, parts mentioned in the present specification, or combinations thereof, but do not preclude the presence or addition of one or more other features, numerals, steps, operations, components, parts, or combinations thereof.

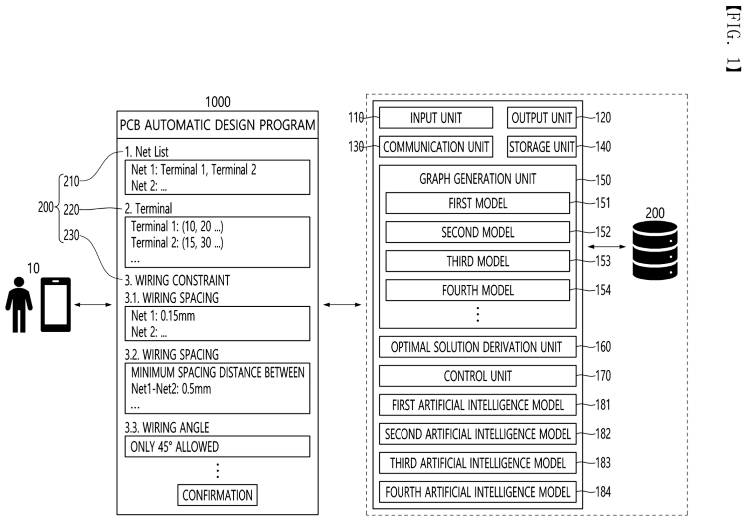

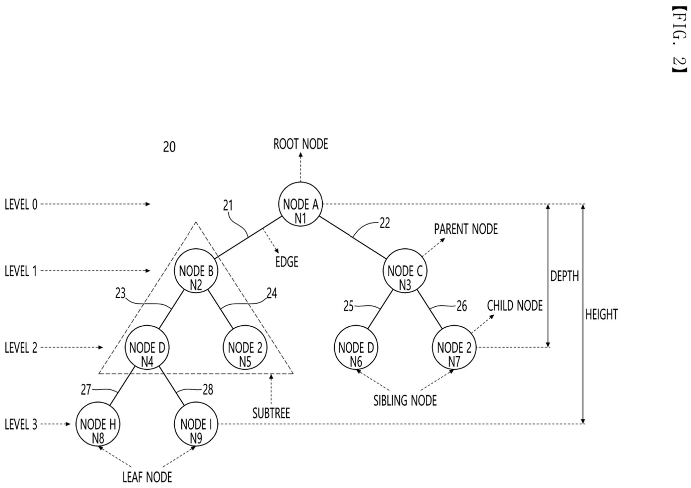

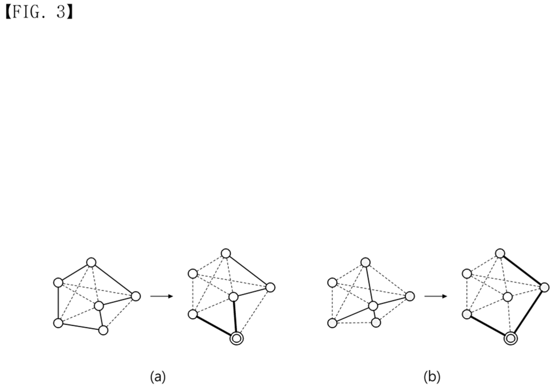

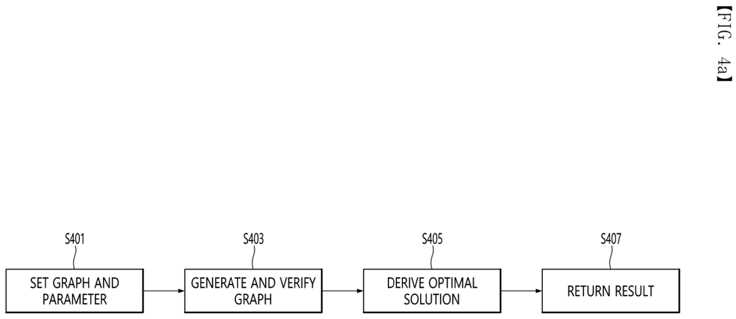

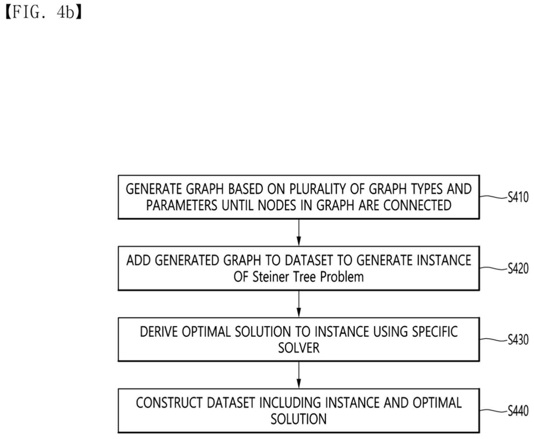

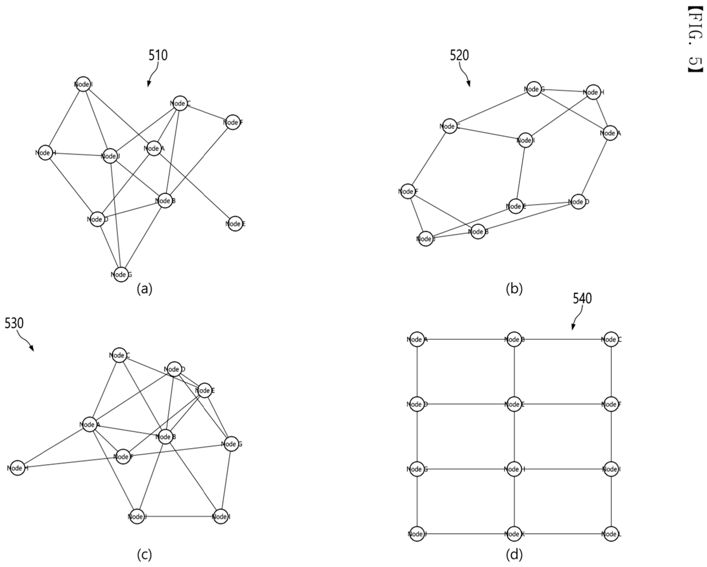

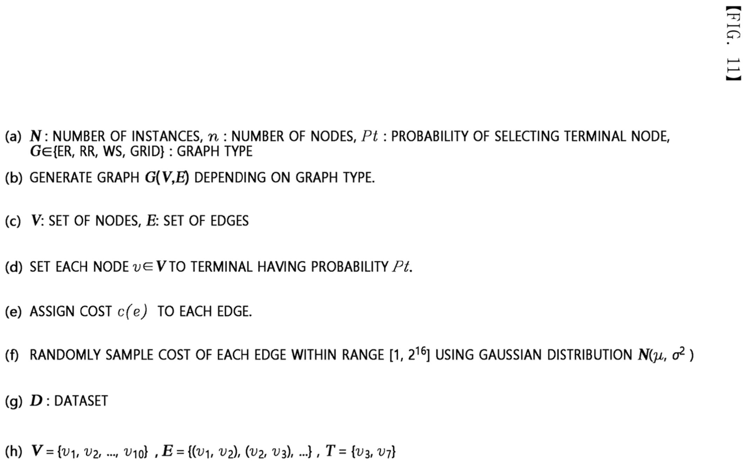

Hereinafter, the present disclosure will be described in more detail with the accompanying drawings. FIG. 1 is a conceptual diagram for describing a combinatorial optimization system according to the present disclosure, FIG. 2 is a conceptual diagram for describing a tree structure, and FIG. 3 is a diagram for comparing and describing a traveling salesman problem and a Steiner tree problem. FIGS. 4A and 4B are flowcharts for describing a method of generating training data according to the present disclosure, and FIGS. 5 to 10 are conceptual diagrams for describing a method of generating training data according to the present disclosure. FIGS. 11 to 19 are formulas for describing a method of generating training data and a method of training a combinatorial optimization model using the same according to the present disclosure.

The present disclosure relates to a method of generating training data and a method of training a combinatorial optimization model using the same. The method of generating training data and the method of training a combinatorial optimization model using the same according to the present disclosure may be usefully utilized in various situations. The present disclosure is for generating training data for learning a Steiner tree problem (STP), and provides a method and system for generating a large-scale, high-quality dataset for learning and evaluating a Steiner tree problem. In addition, the present disclosure provides a method and system for training a combinatorial optimization model (neural combinatorial optimization (NCO)) that computes the Steiner tree problem using the constructed (or generated) dataset. Hereinafter, for convenience of description, the system for generating training data and the system for training a combinatorial optimization model will not be separately referred to, but will be collectively referred to as a "combinatorial optimization system".

The Steiner tree problem (STP) may mean an NP-hard combinatorial optimization problem with various applications. More specifically, the Steiner tree problem, which is one of the major areas in the field of combinatorial optimization (CO), may be understood as a combinatorial optimization problem that aims at finding a minimum-cost tree including all nodes designated as terminals among nodes in a graph. Solving the Steiner tree problem may be essential for minimizing costs and resources while optimizing connections between various objects or locations. For example, the Steiner tree problem may be utilized in various industrial fields, such as printed circuit board (PCB) design, circuit design, network design, facility layout, and image processing.

Here, the combinatorial optimization is a branch of optimization, and may be a field that finds a solution that satisfies an optimal objective value from a finite set of discrete candidate solutions. For example, a traveling salesman problem, which is one of the combinatorial optimization problems, is a problem of determining the order of visiting cities so that a salesman visits each city exactly once while minimizing a total travel distance, when the locations of the cities that the salesman should visit are given. In this case, the objective value of the traveling salesman problem may be the total travel distance between cities.

Meanwhile, the method of generating training data and the method of training a combinatorial optimization model using the same according to the present disclosure may be applied to various industries and services. For example, the present disclosure may be applied to and utilized in systems (or applications, software, websites, programs, etc.) based on at least one of an artificial neural network, a generative artificial intelligence model (e.g., a diffusion model), or an AI algorithm (e.g., a shortest path search algorithm, an algorithm related to combinatorial optimization, etc.).

In addition, the present disclosure may be usefully utilized in various fields, such as research related to neural combinatorial optimization, PCB design, circuit design, network design, facility layout, and image processing.

Meanwhile, the industries and services to which the combinatorial optimization system according to the present disclosure may be applied will be briefly described with reference to FIG. 1. The combinatorial optimization system according to FIG. 1 may include various combinatorial optimization models or artificial intelligence models, and may use the combinatorial optimization model or the artificial intelligence model to generate an optimal solution (i.e., an optimal wiring path) that satisfies various constraints (e.g., wiring prohibited area, wiring width and spacing, wiring angle, multi-layer wiring, etc.) required for PCB design or search for a shortest path for wiring terminals at a minimum cost based on PCB data input by a user.

The combinatorial optimization system according to the present disclosure aims to generate the large-scale, high-quality dataset capable of solving the Steiner tree problem and provide the combinatorial optimization model that may be applied to various industries and services to generate the optimal solution.

Meanwhile, as illustrated in FIG. 1, a combinatorial optimization system 100 according to the present disclosure may include at least one of an input unit 110, an output unit 120, a communication unit 130, a storage unit 140, a graph generation unit 150, an optimal solution derivation unit 160, and a control unit 170, and combinatorial optimization models 181, 182, 183 and 184

The combinatorial optimization system 100 according to the present disclosure may include at least one processor and at least one memory including a computer program code. In this case, the storage unit 140 may function as memory. In present disclosure, the memory and the program code may cooperate with the processor to perform a series of processes described below.

Although not illustrated, the combinatorial optimization system 100 according to the present disclosure may include one or more processors, in which the processors may include one or more general-purpose processors and/or one or more special-purpose processors (e.g., a digital signal processor, a tensor processing unit (TPU), a graphics processing unit (GPU), a neural network processing unit (NPU), an application-specific integrated circuit (ASIC), etc.). One or more processors may be configured to execute instructions stored (or included) in the storage unit 140, computer-readable instructions, and/or other instructions described herein. The combinatorial optimization system and method according to the present disclosure may perform data processing to be described below through cooperation between a memory and at least one processor. The processor may perform a series of operations and data processing using data and information stored in the memory. In this case, the memory may be a component of the storage unit 140.

Meanwhile, the input unit 110 serves as a means for data input, and may be implemented in various forms. For example, the input unit 110 may be configured to receive the user input. The input unit 110 may be configured to receive the user input from a user terminal 10. Here, "receiving an input" may mean receiving an input signal (or a selection signal) corresponding to a user input, based on an input being made by a user through a configuration of an input unit provided in the user terminal 10.

In addition, in the present disclosure, the input unit 110 does not necessarily refer to a hardware means, but may be understood as a path for receiving input from a user.

The input unit 110 may also be referred to as a user interface module. The input unit 110 may include a touch screen, a computer mouse, a keyboard, a keypad, a touch pad, a trackball, a joystick, a speech recognition module, or other similar devices. However, in the present disclosure, the type of the input unit 110 is not limited.

Here, the user input may include documents, text, images (or videos), speech, etc. In this case, the combinatorial optimization system 100 may further include a module that converts speech into text.

Next, the output unit 120 may output information through components (e.g., a display unit, a touch screen, a speaker, etc.) of the output unit provided in the user terminal 10 interoperating with the combinatorial optimization system 100 according to the present disclosure. For example, the output unit 120 may output a page (or service page, 1000) linked to the combinatorial optimization system 100 according to the present disclosure to the display unit of the user terminal 10. In addition, the output unit 120 does not necessarily refer to hardware means, but may be understood as a channel for outputting results to the user.

Next, the communication unit 130 may be connected to the user terminal 10, a server (e.g., a central server, an external server, etc.), a device, at least one network, and the like via a wireless or wired network, and may be configured to receive or transmit overall data and information necessary for the operation of the combinatorial optimization system 100 according to the present disclosure.

Here, the user terminal 10 may include at least one of a mobile phone, a smart phone, a notebook computer, a laptop computer, a slate PC, a tablet PC, an ultrabook, a desktop computer, a digital broadcasting terminal, a personal digital assistant (PDA), a portable multimedia player (PMP), a navigation device, or a wearable device (e.g., a smartwatch, smart glass, or a head-mounted display (HMD)).

Furthermore, the communication unit 130 may support various communication schemes depending on communication standards of a communicating device.

For example, the communication unit 130 may be configured to communicate with communication targets using at least one of wireless LAN (WLAN), wireless-fidelity (Wi-Fi), wireless fidelity (Wi-Fi) direct, digital living network alliance (DLAN), wireless broadband (WiBro), world interoperability for microwave access (WiMAX), high speed downlink packet access (HSDPA), high speed uplink packet access (HSUPA), long term evolution (LTE), long term evolution-advanced (LTE-A), 5th generation (5G) mobile telecommunication, Bluetooth (Bluetooth^{™}), radio frequency identification (RFID), infrared data association (IrDA), ultra-wideband (UWB), ZigBee, near field communication (NFC), Wi-Fi direct, and wireless universal serial bus (wireless USB) technologies.

Next, the storage unit 140 (or memory) serves to store various data related to the present disclosure and may include one or more non-transitory computer-readable storage media that may be read and/or accessed by at least one of the one or more processors.

The one or more computer-readable storage media may include volatile and/or nonvolatile storage components, such as optical, magnetic, organic, or other memory or disk storage devices. In some examples, the storage unit 140 may be implemented using a single physical device (e.g., one optical, magnetic, organic, or other memory or disk storage device), while in other examples, the storage unit 140 may be implemented using two or more physical devices.

The storage unit 140 may include computer-readable instructions and additional data. The storage unit 140 may include storage necessary to perform at least some of the methods, scenarios, and techniques described herein and/or at least some of the functions of the devices and networks.

Furthermore, at least a portion of the storage unit 140 may be cloud storage or a cloud server. The storage unit 140 may store data corresponding to the user input received from the input unit 110 and at least a portion of training data.

That is, the storage unit 140 may be sufficient as long as it has a space storing information necessary for the operation of the combinatorial optimization system 100 according to the present disclosure, and it may be understood that there are no physical space restrictions.

Furthermore, the storage unit 140 may store a computer program including computer program instructions. Furthermore, the storage unit 140 may store a computer program including computer program instructions that control the operation of the system 100 or the operation of the control unit 170 when the computer program instructions are loaded onto the processor of the system 100.

Next, the graph generation unit 150 may serve to generate various types of graphs including (or composed or formed of) nodes and edges. To this end, the graph generation unit 150 may include at least one model that generates respectively different types of graphs composed of nodes and edges. For example, the graph generation unit 150 may include at least one of a first model 151, a second model 152, a third model 153, and a fourth model 154.

The first model 151 may also be referred to as a "Erods-Renyi (ER) model", and may be a model that generates a first type of graph among the plurality of predetermined graph types. For example, as illustrated in (a) of FIG. 5, the first model 151 may generate a first type of graph 510 by connecting edges at the same probability for all pairs of nodes in the graph. The first type of graph 510 may include an ER graph. The first type of graph 510 is a type of random graph, and the probability that an edge exists between any pair of nodes may be "r". In order to generate the first type of graph, the graph generation unit 150 may sample the edge generation probability from a uniform distribution and use (or employ, utilize, etc.) the sampled value as parameters of the first model 151.

The second model 152 may also referred to as a "random-regular (RR) graph model", and may be a model that generates a second type of graph among the plurality of predetermined graph types. For example, as illustrated in (b) of FIG. 5, the second model 152 may generate a second type of graph 222 in which all nodes in the graph have the same degree. The second type of graph 520 may include the random regular (RR) graph. The second type of graph 520 is a type of random graph, and may have the characteristics that all nodes have the same degree. The graph generation unit 150 sets all nodes to have the same number of neighbors to generate the second type of graph 222. In this case, the number of neighbors is sampled from "Uniform ({3,4,5})," which is the uniform (or equal) distribution in the graph degree, and the sampled degree value may be used as parameters of the second model 152.

The third model 153 may also be referred to as a "Watts-Strogatz (WS) model", and may be a model that generates a third type of graph among the plurality of predetermined graph types. For example, as illustrated in (c) of FIG. 5, the third model 153 may generate a third type of graph 530 having small-world properties that include both minimum path length and high clustering. The third type of graph 530 may include a WS graph. The third type of graph 530 is a graph generated to simulate (or imitate) small-world networks, and may provide a balance between regular and random connections to reproduce a small-world effect and clustering observed in the real world. To generate the third type of graph 223, the third model 153 may sample an average node degree from "Uniform({3,4,5,6})" which is a uniform distribution, and a rewiring probability from "Uniform(0, 1)".

The fourth model 154 may also be referred to as a "grid model", and may be a model that generates a fourth type of graph among the plurality of predetermined graph types. For example, as illustrated in (d) of FIG. 5, the fourth model 154 may generate a fourth type of graph 540 in which all nodes are arranged in a lattice form. The fourth type of graph 540 may include a grid or lattice graph. The fourth type of graph 540 may be understood as a graph having a structure in which nodes and edges are arranged in a lattice form. When generating the fourth type of graph 540, the fourth model 154 may sample a combination of width and height for the input number n of nodes and set the combination of width and height to be a product of n. For example, when n = 20, the fourth model 154 may generate a graph by sampling the combination of width and height from a combination such as 4×5 or 5×4, and ensuring that one dimension is necessarily greater than a predetermined value (e.g., 4). In this case, unlike other graph types, for the fourth type of graph-based instance, the edge cost may be set to a specific fixed value (e.g., 1). That is, among the plurality of graph types 510, 520, 530, and 540, the fourth type of graph 540 generated from the fourth model 154 may be generated with the edge cost fixed. It may be understood as being intended to ensure that the instance has properties similar to those explored (or discovered) in a Euclidean space.

However, in the present disclosure, the model included in the graph generation unit 150 (or the combinatorial optimization system 100) for generating the plurality of graph types is not necessarily limited to the above-described model, and may further include other models in addition to the first model 151, the second model 152, the third model 153, and the fourth model 154 described above. It goes without saying that the models applied in the present disclosure may be variously modified and/or set to one or more depending on the purpose or circumstances (cases) of use.

Next, the optimal solution derivation unit 160 (or instance calculation unit, etc.) may be configured to calculate (or derive) an optimal solution to an instance of a Steiner tree problem (or combinatorial optimization problem).

The optimal solution derivation unit 160 may include a mixed-integer linear programming (MILP)-based SCIP-Jack solver for calculating an optimal solution. The mixed-integer linear programming is an extension of linear programming and may be understood as a scheme for modeling and solving problems by combining integer and real variables. The optimal solution derivation unit 160 may calculate the optimal cost of the instance of the Steiner tree problem generated based on a graph, and derive the optimal solution based on the calculated result.

Next, the control unit 170 may serve to control the overall operation of the combinatorial optimization system 100 according to the present disclosure. The control unit 170 may process signals, data, information, etc., input or output through the components of the combinatorial optimization system 100 described above, or perform a series of data processing to provide or process appropriate information and functions to a user. The control unit 170 may be physically implemented by the processor described above.

In an embodiment, the control unit 170 may use the graph generation unit 150 to generate a plurality of types of graphs composed of nodes and edges, and add the generated graphs to a dataset 200 to generate the instances of the Steiner tree problem (STP). Further, the control unit 170 may use the optimal solution derivation unit 160 to derive optimal solutions to each instance included in the dataset 200, and construct the dataset 200 that includes the instances and the optimal solutions derived for each instance.

Hereinafter, the tree structure and components will be briefly described with reference to FIG. 2.

As illustrated in FIG. 2, a tree 20 is abstract data representing a hierarchical structure with a series of connected nodes, and is referred to as a tree because it resembles a natural tree. The tree 20 is composed of connected nodes like a connected list, and is broadly included in a graph. Like the graph, the tree 20 is a set of hierarchical data composed of nodes (vertices) and edges. However, unlike the graph, the tree 20 has a parent-child relationship between nodes. The direction of the tree 20 is always unidirectional, and an edge is connected from a parent node N3 to a child node N7. When there is an edge connecting the child node N7 to the parent node N3 or a sibling node N6, the hierarchical structure is not a tree. The tree 20 may have no connected child node at all, or may have a plurality of connected child nodes. For example, in a real tree, branches and leaves grow upward from a root at the bottom, but the tree structure is typically expressed like an upside-down tree.

Furthermore, a tree with N nodes may be configured to include "N-1" edges. For example, a tree 20 with "9" nodes may include "8" edges.

Looking at the components of the tree 20, first, nodes N1, N2, N3, N4, N5, N6, N7, N8, and N9 are the basic elements that constitute the tree 20 and may also be referred to vertices.

Edges 21, 22, 23, 24, 25, 26, 27, and 28 are lines (or links) connecting the nodes N1, N2, N3, N4, N5, N6, N7, N8, and N9. In the tree 20, the number of edges 21, 22, 23, 24, 25, 26, 27, and 28 is equal to "the number of nodes - 1." In addition, the converse of this proposition may also be established.

The root node N1 is located at the very top (upper portion) of the tree 20 and may include nodes without parent nodes. The tree 20 may be configured to have only one root node.

The leaf nodes N8 and N9 are located at the very bottom (lower portion, end) of the tree. Since the leaf nodes N8 and N9 are located at the very bottom, the leaf nodes N8 and N9 may include nodes without child nodes. The leaf node may also be referred to as a "terminal node".

An internal node includes all nodes located between the root node and the leaf nodes, and may also be referred to as a branch node.

Unlike the leaf nodes, non-terminal nodes may include nodes with child nodes.

These root nodes, leaf nodes, internal nodes, etc., may all be referred to as differently depending on their location. For example, when a tree has only one root node, the corresponding node may have characteristics of both the root node and the leaf nodes.

As described above, the tree 20 has the hierarchical structure, so all nodes have the parent-child relationships with one another. For example, in one node in the tree 20, the node N3 adjacent to the root node N1 becomes the parent node, and the nodes N6 and N7 adjacent in the opposite direction become the child nodes. All nodes, excluding the root node N1, may include exactly one parent node.

The sibling nodes may include the child nodes N6 and N7 with the same parent node N3. The sibling nodes are generally expressed in order, starting from the left node.

A path is defined as the sequence of nodes that lie on a path from one specific node to another specific node. For example, a path from node H N8 to node E N5 in a tree 20 that constitutes a tree 20 may be "H-D-B-E".

A length of the path may refer to the number of nodes that should be passed from a starting node to a destination node of the path.

A size of the node may refer to the total number of descendant nodes, including itself. For example, a size of node B N2 may be "3".

A depth of the node may refer to a length of a path from the root node N1 to a specific node. For example, a depth of the node H N8 may be "3", a depth of the node B N2 may be "1," and a depth of the root node N1 may be "0".

A level may refer to a set of nodes with the same depth in the tree 20. For example, level 2 in the tree 20 may include node D N4, node E N5, node F N6, and node G N7. For another example, a level in node A N1 may be "0", and levels in node D N4, node E N5, node F N6, and node G N7 may be "2".

A height of the tree may refer to a length of a path from the root node N1 to the leaf nodes N8 and N9 located at the deepest place.

A degree of the node may refer to the number of nodes that are in a child relationship with a specific node. Since the tree 20 is unidirectional, from the perspective of the graph, the tree 20 may refer to an out-degree of a node. For example, "the number of subtrees/the number (degree) of edges = the number of edges of each node". In this case, the degree of the node A N1 may be "2", and the degree of the node B N2 may be "2".

The degree of the tree may refer to the maximum value (or maximum degree) among the degrees of nodes within the tree. For example, the degree of the tree 20 may be understood as "2".

The size of the tree may refer to the number of nodes constituting the tree 20. For example, since the total number of nodes constituting the tree 20 is 10, the number of trees 20 may be "10".

A width of the tree may refer to a size of a specific level or a size of a level including the most nodes in the tree 20.

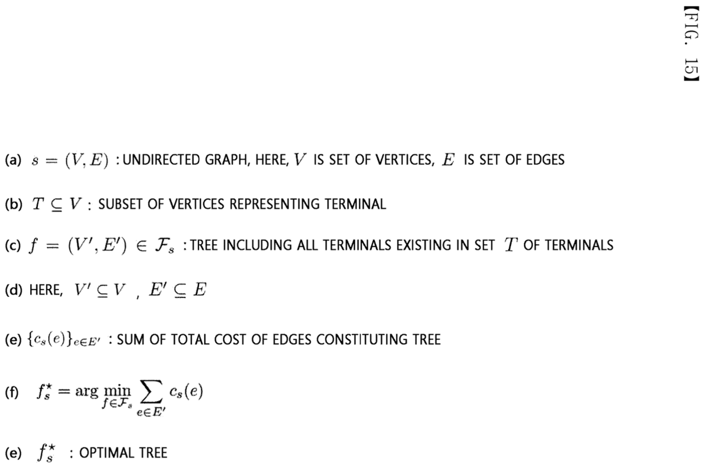

Meanwhile, as described above, the Steiner tree problem is an important combinatorial optimization problem in graph theory. As illustrated in (a) of FIG. 15, in the instance of the Steiner tree problem, the graph may be expressed as an undirected graph s = (V, E). Here, V may refer to a set of nodes (vertices) in the graph, and E may refer to a set of edges connecting the nodes in the graph. In this case, a subset of nodes represented (or specified) as terminals within the set of nodes in the graph may be defined as illustrated in (b) of FIG. 15.

The set V of nodes may represent a set including all nodes in the graph, the set E of edges may represent connections between the nodes within the set V of nodes, and each edge within the set E of edges may be assigned a specific cost. In addition, the edge connection scheme may vary depending on the graph type. For example, in the first type of graph, pairs of nodes are connected with certain probability, while in the second type of graph, edges may be connected so that all nodes have the same degree.

Meanwhile, the Steiner tree problem aims to find a tree structure that includes all nodes in a set T of terminals. The tree structure and the characteristics of the tree structure may be represented as illustrated in (c) and (d) of FIG. 15. Such a tree should connect all nodes in the set T of terminals with minimal cost. That is, the sum (represented as illustrated in (e) of FIG. 15) of the total cost of edges constituting the tree should be minimized. The optimal solution (or optimal tree, represented as illustrated in (g) of FIG. 15) may be defined as illustrated in (f) of FIG. 15.

In this regard, both the Steiner tree problem and the traveling salesman problem is a problem finding a path satisfying the minimum cost in the graph, but there is a difference between the Steiner tree problem and the traveling salesman problem.

For example, referring to (a) of FIG. 3, the traveling salesman problem requires visiting all nodes exactly once while minimizing the total path. In the traveling salesman problem, even if the locations of the nodes are changed, only slight change occurs in the structure of the path, and the stability of the solution may be high.

On the other hand, referring to (b) of FIG. 3, the Steiner tree problem focuses on the connections between the terminals and does not necessarily require visiting all nodes. In the Steiner tree problem, when the locations of the nodes are changed, the entire set of edges of the solution may undergo significant variations, and the solution may include not only the terminals but also additional intermediate nodes, so the complexity of the solution may increase.

In this way, as illustrated in (a) and (b) of FIG. 3, comparing the traveling salesman problem and the Steiner tree problem, in the Steiner tree problem, the dependency among the terminals may exist over a broader range. That is, in the Steiner tree problem, even a small change (perturbation) in the solution space may have significant effects on distant domains, which may imply that a small change may have a significant impact on the overall optimization result.

Meanwhile, the present disclosure is to provide a large-scale dataset and environment capable of solving the Steiner tree problem. More specifically, the present disclosure is to provide a large-scale, high-quality dataset that can be universally utilized in various learning environments. Hereinafter, the method of generating training data for learning a Steiner tree problem will be described in more detail.

In the present disclosure, the process of generating a graph may be performed based on the plurality of graph types and parameters until the nodes in the graph are connected by the edges (S410, see FIG. 4B).

First, the control unit 170 may perform an initial setting process (or step) that sets the plurality of graph types and parameters (S401, see FIG. 4A).

During the initial setting process, various setting values (or information) required for the graph generation may be set. As illustrated in (a) of FIG. 11, the control unit 170 may set the number N of instances, the number n of nodes, the predetermined probability of selecting the terminal node, and the graph type.

Here, at least one (or some) of the number of instances, the number of nodes, the predetermined probability of selecting the terminal node, and the graph type may also be understood as the input data input to each of the plurality of models 151, 152, 153, and 154 included in the graph generation unit 150 described above.

The number of instances represents the number of Steiner tree problems to be generated. For example, one specific instance may include one specific graph and the Steiner tree problem in the specific graph. As more instances are generated, the environment may be provided in which the artificial intelligence model may learn various graph structures and problem situations.

The number of nodes represents the number of nodes included in the graph and may be a factor in determining the size of the graph. For example, since the connectivity and complexity of the graph vary depending on the number of nodes, it may be important to set the number of nodes with various sizes.

The predetermined probability for selecting the terminal node may represent the probability that each node included in the graph will be specified (or selected) as the terminal (the node that is required to be connected). For example, when the predetermined probability is set to "0.2", each node may be identified as a terminal with a 20% probability. The present disclosure is described under the assumption that the predetermined probability is set to "0.2", but is not necessarily limited thereto, and it goes without saying that the predetermined probability may be changed (or set) by an administrator of the combinatorial optimization system 100 or the combinatorial optimization system 100 itself.

The graph type may be utilized to determine the structural characteristics of the graph to be generated. For example, as illustrated in (a) to (d) of FIG. 5, the plurality of graph types may include a first type of graph 510, a second type of graph 520, a third type of graph 530, and a fourth type of graph 540. Since each of the graph types has respectively different characteristics, the environment may be provided in which the artificial intelligence model may learn various structures.

In this regard, in the present disclosure, the edge connection scheme may vary depending on the plurality of graph types. A graph corresponding to at least one of the plurality of graph types may be generated by sampling the edge generation probability from the uniform distribution, sampling the degree of the graph, or sampling the average node degree.

First, at least one of the plurality of graph generation models 151, 152, 153, and 154 may generate the graph by sampling the edge generation probability from the uniform distribution.

More specifically, the first model 151, which generates the first type of graph 510 among the plurality of graph types 510, 520, and 530, may generate the graph 510 by connecting edges between all pairs of nodes in the graph with the same probability. In this case, the first model 51 may generate the first type of graph 510 by sampling the edge generation probabilities from the uniform distribution.

In addition, at least one of the plurality of graph generation models 151, 152, 153, and 154 may generate the graph by sampling the degree of the graph from the uniform distribution.

More specifically, the second model 152, which generates the second type of graph 520 among the plurality of graph types 510, 520, and 530, may generate the graph 520 by ensuring that all nodes in the graph have the same degree. In this case, the second model 152 may generate the second type of graph 520 by sampling the degree of the graph from "Uniform ({3,4,5}) which is the uniform distribution.

Furthermore, at least one of the plurality of graph generation models 151, 152, 153, and 154 may generate the graph by sampling the average node degree from the uniform distribution.

More specifically, the third model 153, which generates the third type of graph 530 among the plurality of graph types 510, 520, and 530, may generate a graph 530 having small-world properties that include both the minimum path length and high clustering. In this case, the third model 153 may generate the third type of graph 530 by sampling the average node degree from "Uniform({3,4,5,6})" which is the uniform distribution, and sampling the rewiring probability from "Uniform(0, 1)".

Meanwhile, the plurality of graph types may further include at least one graph type (e.g., the first type of graph 510, the second type of graph 520, and the third type of graph 530) described above and another type (e.g., the fourth type of graph 540).

At least one of the plurality of graph generation models 151, 152, 153, and 154 may generate the graph by fixing the edge cost.

More specifically, the fourth model 154, which is different from the first model 151, the second model 152, and the third model 153 described above, may generate the fourth type of graph 540 in which all nodes are arranged in a lattice form. In this case, the fourth model 154 may generate the fourth type of graph 540 by fixing the edge cost to a specific fixed value (e.g., 1). That is, unlike other graph types, the fourth type of graph 540 may be generated while the edge cost is fixed.

That is, each of the plurality of models 151, 152, 153, and 154 included in the graph generation unit 150 may generate respectively different types of graphs based on the set number of instances, the set number of nodes, the predetermined probability of selecting the terminal node, and the graph type.

Next, in the present disclosure, during the process of generating a graph based on the set graph type and parameters, the graph may be generated until the nodes in the graph are connected by the edges.

When the graphs are generated from each of the plurality of models 151, 152, 153, and 154, the graph generation unit 150 (or control unit 170) may perform a verification process on the generated graphs (S403, see FIG. 4A).

In the present invention, the process of performing the verification on the generated graphs and iterating (or regenerating) the graph generation until unconnected nodes in the graph are connected may be performed identically on all types of graphs generated from the plurality of models 151, 152, 153, and 154. Accordingly, for convenience of description and to avoid the redundancy, the above process will be described under the assumption of the graph generated from at least one of the plurality of models 151, 152, 153, and 154.

Each of the plurality of models 151, 152, 153, and 154 may generate the graph based on the set graph type and parameters. As illustrated in (b) of FIG. 11, the graph generation unit 150 may generate a specific graph according to the graph type. In this case, in (b) of FIG. 11, V may refer to the set of nodes, and E may refer to the set of edges (see (c) of FIG. 11).

In an embodiment, it is assumed that the graph type is set to the "first type of graph", the number of instances is set to "100", the number of nodes is set to "10", and the predetermined probability is set to "0.2". The graph generation unit 150 may generate the graph using the first model 51 among the plurality of models 151, 152, 153, and 154. The first model 51 may generate the plurality (e.g., 100) of first type of graphs 510 including the number (e.g., 10) of nodes according to the number of nodes, based on the number of instances and the number of nodes.

In another embodiment, it is assumed that the graph type is set to the "second type of graph", the number of instances is set to "200", the number of nodes is set to "10", and the predetermined probability is set to "0.2". The graph generation unit 150 may generate the graph using the second model 520 among the plurality of models 151, 152, 153, and 154. The second model 520 may generate the plurality (e.g., 200) of second type of graphs 520 including the number (e.g., 10) of nodes according to the number of nodes, based on the number of instances and the number of nodes.

When the graph is generated, the graph generation unit 150 may perform the connectivity verification (or inspection) on the generated graph. In this case, the verification of the generated graph may also be performed by the model itself. During the connectivity verification process, when there are separated nodes (i.e., isolated nodes) among the nodes included in each of the generated graphs, the graph generation may be iteratively performed so that the nodes are connected in all graphs. This process may also be referred to as a "graph generation loop" process.

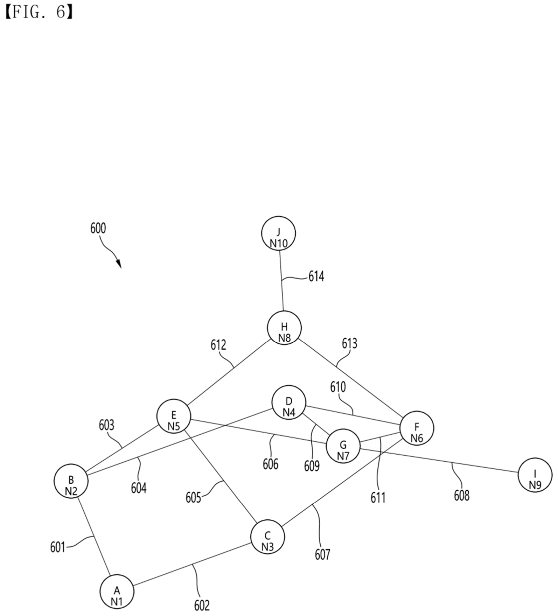

More specifically, as illustrated in FIG. 6, when a graph 600 is generated, a specific model (hereinafter, the first model 151) may analyze the generated graph 600 to verify the connectivity in the graph 600. The first model 151 may analyze a plurality of nodes N1, N2, N3, N4, N5, N6, N7, N8, N9, and N10 included in the generated graph 600 to determine whether to iterate the generation of the graph.

The first model 151 may iteratively perform the graph generation until a specific node N9 specified as the separated node is connected by an edge, based on the separated node N9 being specified among the plurality of nodes N1, N2, N3, N4, N5, N6, N7, N8, N9, and N10, as the verification result through the analysis of the plurality of nodes N1, N2, N3, N4, N5, N6, N7, N8, N9, and N10 included in the graph 600.

For example, it may be confirmed that edges 601, 602, 603, 604, 605, 606, 607, 608, 609, 610, 611, 612, 613, and 614 connecting the remaining nodes N1, N2, N3, N4, N5, N6, N7, N8, and N10 except for the separated ninth node N9 are included in the graph 600. In this case, since there is no edge connecting the sixth node N6 and the ninth node N9, the ninth node N9 may be specified as a separated node during the process of verifying the graph connectivity.

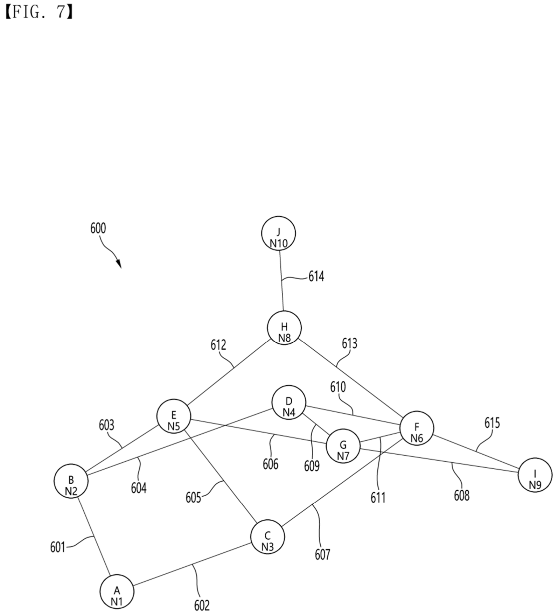

The first model 151 may iterate the generation of the graph 600 so that the ninth node N9 specified as the separated node in the graph 600 is connected. As illustrated in FIG. 7, in the graph loop process, the first model 151 may iterate the generation of the graph 600 until the separated ninth node N9 is connected to the sixth node N6 by an edge 615. Through this process, all nodes N1, N2, N3, N4, N5, N6, N7, N8, N9, and N10 included in the graph 600 are connected through the edges 601, 602, 603, 604, 605, 606, 607, 608, 609, 610, 611, 612, 613, 614, and 615, so the graph 600, which does not include the separated nodes, may be generated.

Meanwhile, in the present disclosure, a process of generating the instances of the Steiner tree problem by adding the generated graph to the dataset may be performed (S420, see FIG. 4B).

As described above, the number of instances represents the number of Steiner tree problem data to be generated. For example, one specific instance may include one specific graph and the Steiner tree problem in the specific graph.

The control unit 170 may add the generated graph 600 to the dataset 200 and generate the instances of the Steiner tree problem added to the dataset 200.

Specifically, when the graph 600 in which all nodes are connected is generated, as illustrated in (d) of FIG. 11, the control unit 170 may set each node in the graph 600 as the terminal with the predetermined probability. The control unit 170 may select (or specify) nodes that are required to be connected among the nodes N1, N2, N3, N4, N5, N6, N7, N8, N9, and N10 included in the graph 600.

The nodes that are required to be connected in the graph 600 may be selected based on the predetermined probability set above. In this case, the selected node may be understood as the terminal.

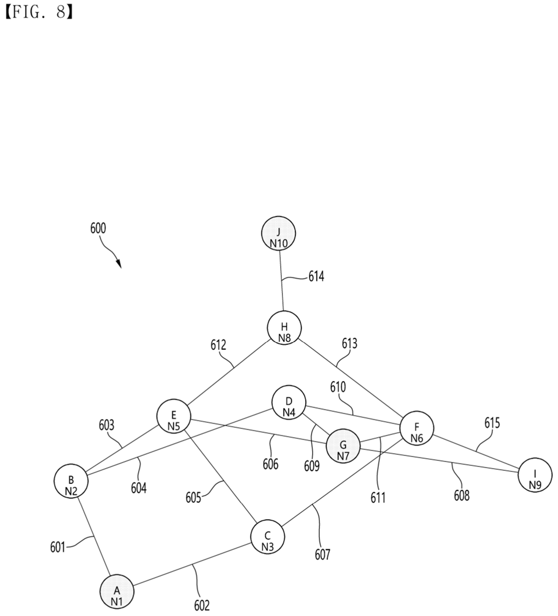

The control unit 170 may select a node corresponding to a terminal from among the plurality of nodes N1, N2, N3, N4, N5, N6, N7, N8, N9, and N10 included in the graph 600 based on the predetermined probability. For example, as illustrated in FIG. 8, the control unit 170 may select at least one of the specific nodes N1, N7, and N10, which are required to be connected, from among the plurality of nodes N1, N2, N3, N4, N5, N6, N7, N8, N9, and N10 included in the graph 600 based on the predetermined probability (e.g., 0.2).

In this case, the first node N1, the seventh node N7, and the tenth node N10 selected based on the predetermined probability may be understood as terminals (or terminal nodes) that are required to be connected by edges in the graph 600. That is, the graph 600 may include terminal nodes, which are nodes that are required to be connected, during the process of calculating (or deriving) the optimal solution. When such terminal nodes are selected, the nodes selected as the terminals should be included in the tree (or subtree) that essentially constitutes the optimal solution.

The control unit 170 may assign a cost to the edges 601, 602, 603, 604, 605, 606, 607, 608, 609, 610, 611, 612, 613, 614, and 615 included in the graph 600.

As illustrated in (e) of FIG. 11, the control unit 170 may assign a cost c(e) to each edge. In this case, as illustrated in (f) of FIG. 11, the cost assigned (or given) to each edge may be randomly sampled from a predetermined range (or a specific range) using a Gaussian distribution. More specifically, the cost of the edge may be sampled as a random integer from a truncated Gaussian distribution having a mean and a variance.

The control unit 170 may use the Gaussian distribution to generate random integers (or random numbers) of a specific range and assign the generated random integers as costs to all edges 601, 602, 603, 604, 605, 606, 607, 608, 609, 610, 611, 612, 613, 614, and 615 that connect the plurality of nodes N1, N2, N3, N4, N5, N6, N7, N8, N9, and N10 included in the graph 600.

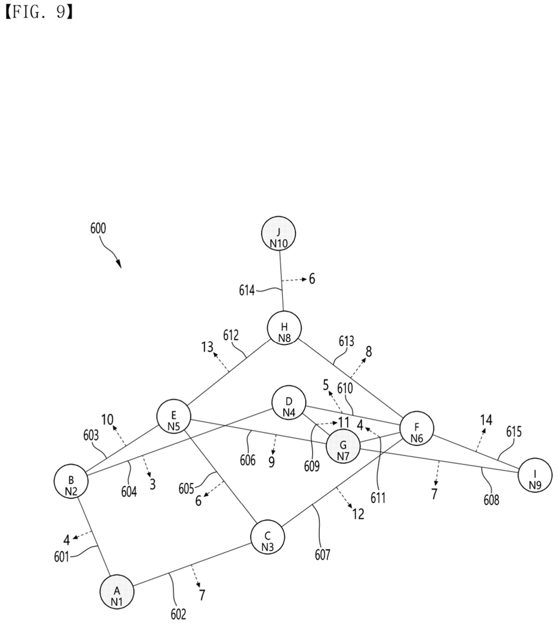

In this case, as the integers are randomly sampled, the magnitudes (or values) of costs assigned to each of the edges 601, 602, 603, 604, 605, 606, 607, 608, 609, 610, 611, 612, 613, 614, and 615 included in the graph 600 may be different. For example, as illustrated in FIG. 9, the first edge 601 may be assigned a cost (or cost value) of "4", and the second edge 602 may be assigned a cost of "7". For another example, the third edge 603 may be assigned a cost of "10", and the fourth edge 604 may be assigned a cost of "3". For another example, the ninth edge 609 may be assigned a cost of "11", the tenth edge 610 may be assigned a cost of "5", and the eleventh edge 611 may be assigned a cost of "4".

Furthermore, the control unit 170 may add the generated graph 600 to the dataset 200 to generate the instance of the Steiner tree.

One specific instance of the Steiner tree may include the graph 600 generated above, the set T of terminal nodes, and the costs assigned to each of the plurality of edges. The control unit 170 may group the costs assigned to each of the graph 600, the terminals (e.g., the first node N1, the seventh node N7, the tenth node N10, etc.) selected based on the predetermined probability, and the costs assigned to each of the plurality of edges 601, 602, 603, 604, 605, 606, 607, 608, 609, 610, 611, 612, 613, 614, and 615, and store the grouped data in the storage unit 140 (or memory). In addition, the control unit 170 may include the grouped graph 600, terminal nodes, and costs of edges as the instance of the Steiner tree in the dataset 200 (the dataset is represented as illustrated in (g) of FIG. 11). That is, the costs assigned to the graph, the terminals, and the edges in the dataset 200 may be grouped by instance and included in the dataset 200.

As an example related thereto, the instance of the first type of graph 510 with the number of nodes set to "10" may be represented as illustrated in (h) of FIG. 11.

Meanwhile, in the present disclosure, a process of deriving an optimal solution to an instance using a specific solver may be performed (S430, see FIG. 4B).

The control unit 170 may use the optimal solution derivation unit 160 to derive an optimal solution to at least one instance included in the dataset 200 (S405, see FIG. 4A).

As described above, the optimal solution derivation unit 160 may be configured to derive the optimal solution to the instance of the Steiner tree problem.

In the present disclosure, the optimal solution derivation unit 160 may include at least one solver for deriving the optimal solution to the instance. The optimal solution derivation unit 160 may include at least one of a first solver, a second solver, a third solver, and a fourth solver for derving the optimal solution.

The first solver is a linear programming (MILP)-based solver, and is also referred to as a "SCIP-Jack solver". The mixed-integer linear programming is an extension of linear programming and may be understood as a scheme for modeling and solving problems by combining integer and real variables. The first solver may calculate the optimal cost of the instance of the Steiner tree problem generated based on the graph, and derive the optimal solution based on the calculated result.

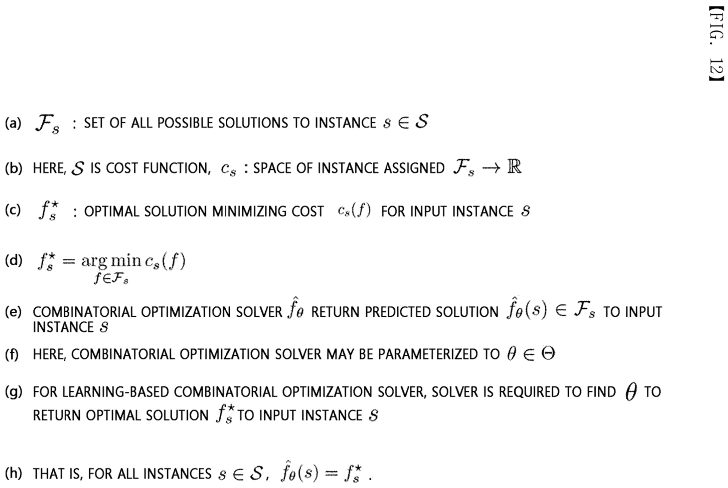

The second solver may also be referred to as a "combinatorial optimization solver". When the set of all possible solutions to the combinatorial optimization problem instance is represented as illustrated in (a) of FIG. 12, S may be a space of instances to which a cost function is assigned (see (b) in FIG. 12). As illustrated in (c) of FIG. 12, the training object of the second solver is to derive an optimal solution (represented as illustrated in (a) of FIG. 12) that minimizes the cost for the input (or given) instance(s), and the optimal solution may be defined as illustrated in (d) of FIG. 12. Here, the second solver may be a probabilistic algorithm, and may derive (or return) a predicted solution to the input instance(s), as illustrated in (e) of FIG. 12. In this case, the second solver may be parameterized as illustrated in (f) of FIG. 12.

Furthermore, for the learning-based combinatorial second solver, as illustrated in (g) of FIG. 12, it is necessary to find parameters to ensure that the second solver derives the optimal solution to the input instance(s) (i.e., (h) of FIG. 12 for all instances). That is, the objective of the learning-based second solver may be to adjust parameters so as to accurately predict the optimal solution to all instances.

The third solver may also be referred to as an "autoregressive solver". The third solver may generally generate a partial solution sequence (or order) by assigning conditions to previous solutions, and may iteratively perform the step-by-step approach until the feasible optimal solution is reached. That is, the third solver is a solver that predicts the next sequence value based on the current sequence, and may generally expand the partial solutions to generate the optimal solution.

The fourth solver may also be referred to as a "non-autoregressive solver". The fourth solver may generate the optimal solution to the input instance(s) in a single step. That is, the fourth solver may generate the entire solution in a single execution, and therefore, have fast calculation speed.

The control unit 170 may designate any one of the plurality of solvers included in the optimal solution derivation unit 160 as a specific solver for deriving the optimal solution to the instance. For convenience of description, the following description will be given under the assumption that the first solver among the plurality of solvers included in the optimal solution derivation unit 160 is designated as the specific solver.

In the instance of the Steiner tree problem, the objective is to find a tree in which the total cost (or the sum of costs) of paths connecting the terminal nodes, which are required to be connected, among the plurality of nodes included in the graph, is minimized. For another example, it may be understood as finding a subtree in which the sum of edge costs is minimized while all the sets of specific nodes (terminals) are connected.

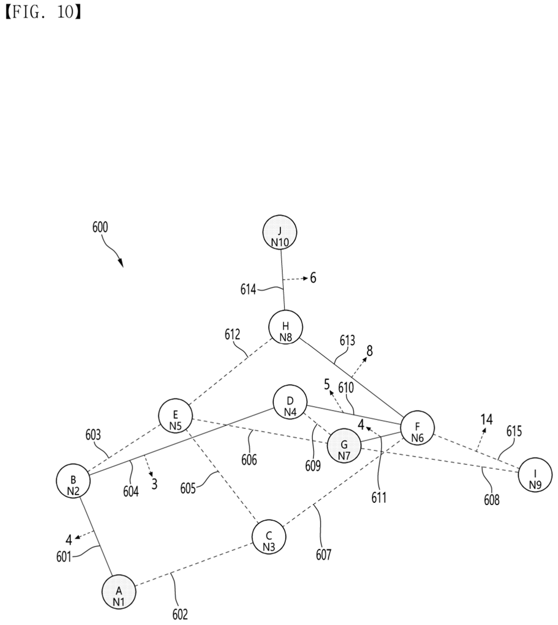

The control unit 170 may use a specific solver to derive an optimal solution to an instance. The specific solver may derive the optimal solution to the instance in which the graph, the terminal nodes, and the edge cost are grouped. For example, as illustrated in FIG. 10, when the specific solver receives the instance in which the graph 600, the terminal nodes N1, N7, and N10, and the costs assigned to each of the plurality of edges 601, 602, 603, 604, 605, 606, 607, 608, 609, 610, 611, 612, 613, 614, and 615 are grouped, the specific solver may calculate paths that may connect the terminal nodes N1, N7, and N10 at the minimum cost, and specify the edges 601, 603, 610, 611, 613, and 614 that connect the terminal nodes N1, N7, and N10 at the minimum cost. Furthermore, the specific solver may derive, as the optimal solution to the instance, the tree in which the total cost (or the sum of costs) of paths connecting the terminal nodes N1, N7, and N10 based on a specified edge is minimized.

Furthermore, when the derivation of the optimal solution is completed, in the present disclosure, a process of constructing the dataset including the instances and the optimal solutions may be performed (S440, see FIG. 4).

When all instances are generated and the optimal solutions to all instances are derived, the control unit 170 may store the derived results in the storage unit 140 and return the derived results to the dataset 200 (S407, see FIG. 4A).

That is, the control unit 170 may construct the dataset 200 that includes the instances of the Steiner tree problem and the optimal solutions derived for the instances from the specific solver.

In an embodiment, the control unit 170 may construct the dataset 200 using the tree in which the total cost of paths connecting the terminal nodes N1, N7, and N10 is minimized or the graph 600 including the tree.

The dataset 200 according to the present disclosure generated through the process described above is composed of various instances that include graphs with respectively different sizes and structures, various terminal node configurations, and edge costs assigned as random integers, so it is possible to provide the environment in which the artificial intelligence model may learn various learning scenarios.

In this regard, the dataset 200 according to the present disclosure may be classified into a training dataset and a verification (test) dataset. In this case, the classified training dataset and verification dataset may be configured to have respectively different sizes (node sizes). For example, the node sizes included in the training dataset may be set to 10, 20, 30, 50, 100, etc. For another example, the node sizes included in the verification dataset may be set to 200, 500, 1000, etc., in addition to the node sizes included in the training data set. The dataset 200 generated according to the present disclosure is a large-scale dataset for learning and evaluating the Steiner tree problem, and may also be referred to as the "Steiner tree problem benchmark (SteBen)".

Meanwhile, the present disclosure is to provide a combinatorial optimization model that may be universally utilized in various industries and services. More specifically, the present disclosure is to provide the combinatorial optimization model capable of solving the Steiner tree problem and generating the optimal solution. Hereinafter, the method of training a combinatorial optimization model will be described in more detail.

Meanwhile, the process of training the combinatorial optimization model (neural combinatorial optimization) according to the present disclosure may include a process of generating the graph based on the plurality of graph types and parameters until the nodes in the graph are connected by the edges, adding the generated graph to the dataset to generate then instance of the Steiner tree problem, a process of deriving the optimal solution to the instance using the specific solver, and a process of constructing the dataset including the instance and the optimal solution and training at least one of the combinatorial optimization models using the constructed dataset.

The control unit 170 may train the combinatorial optimization model using the dataset 200 constructed through the process of generating the training data.

In the present disclosure, the combinatorial optimization model may include at least one of a supervised learning model and a reinforcement learning model. For example, as illustrated in FIG. 1, the combinatorial optimization model according to the present disclosure may include at least one of a first artificial intelligence model 181, a second artificial intelligence model 182, a third artificial intelligence model 183, and a fourth artificial intelligence model 184.

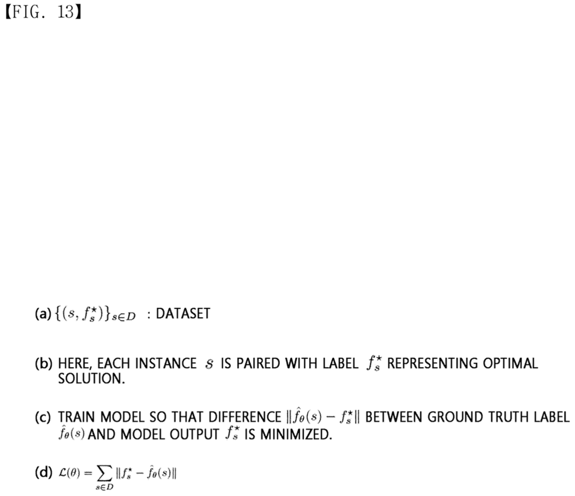

In an embodiment, in the supervised learning, the supervised learning model may be trained using the dataset 200. The control unit 170 may train the supervised learning model using the dataset 200 (the dataset is represented as illustrated in (a) of FIG. 13). As described above, the dataset 200 may be constructed using all instances and the optimal solutions to each of all the instances. Accordingly, the instances included in the dataset 200 may be connected to a label representing the optimal solution. As illustrated in (b) of FIG. 13, each instance(s) may be paired with the label representing the optimal solution. In this case, as illustrated in (c) of FIG. 13, the control unit 170 may train the supervised learning model to minimize a difference between a ground truth label (i.e., the label representing the optimal solution) and the supervised learning model. The supervised learning model may be trained using a loss function defined to minimize the difference between its final output and the ground truth label. This loss function may be represented as illustrated in (d) of FIG. 13.

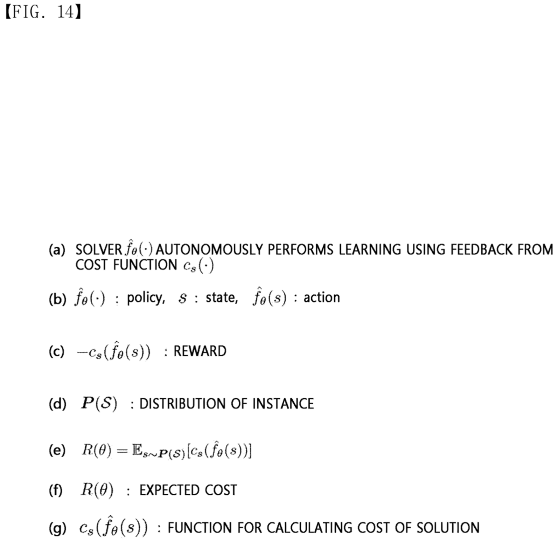

In another embodiment, as illustrated in (a) of FIG. 14, in the reinforcement learning, the reinforcement learning model (or solver) may be trained using feedback from the cost function without relying on the dataset (or labeled data). Here, the reinforcement learning model may be considered a policy, the instance(s) may be considered a state, and the output of the reinforcement learning model may be considered an action (see (b) of FIG. 14). When the action is selected from the reinforcement learning model, the control unit 170 may provide a reward (represented as illustrated in (c) of FIG. 14) for the selected action to the reinforcement learning model. Through a Markov decision process (MDP), the reinforcement learning model may improve the policy through an iterative process of exploration and exploitation. The learning objective of the reinforcement learning model is to minimize the expected cost for the distribution of the instance(s) (represented as illustrated in (d) of FIG. 14), and to minimize the expected cost (represented as illustrated in (f) of FIG. 14) when the instance(s) is sampled from the distribution. That is, the reinforcement learning model may be trained to derive a solution with the lowest cost on average. This objective may be defined as illustrated in (e) of FIG. 14. In this case, in (e) of FIG. 14, a function for calculating the cost of the solution may be represented as illustrated in (g) of FIG. 14.

Meanwhile, in the present disclosure, the supervised learning model and the reinforcement learning model may each be classified into the plurality of model types based on their respectively different characteristics.

More specifically, the supervised learning model and the reinforcement learning model included in the combinatorial optimization model may each be classified into the plurality of model types (e.g., autoregressive as a first type, non-autoregressive as a second type) based on the autoregressive and non-autoregressive characteristics.

The autoregressive scheme is to predict or calculate an output at a current point in time using information on a previous point in time in sequential data, and may be a scheme of calculating a next step by referring to a previous state in time-series data or natural language processing. The non-autoregressive scheme may be a scheme of processing data in parallel without relying on the output of the previous point in time. That is, the non-autoregressive scheme may process the entire sequence at once to generate the solution, and may have the advantage of fast calculation speed.

For example, the model having the autoregressive characteristics may include pointer networks and an attention model (AM), and the model having the non-autoregressive characteristics may include a variant autoencoder (VAE), a generative adversarial network (GAN), and a graph neural network-based diffusion model.

The supervised learning model according to the present disclosure may be classified into the plurality of model types based on the autoregressive and non-autoregressive characteristics. The control unit 170 may analyze the characteristics of each of the plurality of models included in the supervised learning model, and specify the supervised learning model having the autoregressive characteristics and the supervised learning model having the non-autoregressive characteristics, respectively, based on the analysis results to classify the supervised learning models into the plurality of types. For example, the supervised learning model may include the first artificial intelligence model 181 and the second artificial intelligence model 182. In this case, the first artificial intelligence model 181 having the autoregressive characteristics may be classified as a first type of supervised learning model, while the second artificial intelligence model 182 having the non-autoregressive characteristics may be classified as a second type of supervised learning model.

In addition, the reinforcement learning model according to the present disclosure may be classified into the plurality of model types based on the autoregressive and non-autoregressive characteristics. The control unit 170 may analyze the characteristics of each of the plurality of models included in the reinforcement learning model, and specify the reinforcement learning model having the autoregressive characteristics and the reinforcement learning model having the non-autoregressive characteristics, respectively, based on the analysis results to classify the reinforcement learning models into the plurality of types. For example, the reinforcement learning model may include the third artificial intelligence model 183 and the fourth artificial intelligence model 184. In this case, the third artificial intelligence model 183 having the autoregressive characteristics may be classified as a first type of reinforcement learning model, while the fourth artificial intelligence model 184 having the non-autoregressive characteristics may be classified as a second type of reinforcement learning model.

In this regard, the control unit 170 may select one of the combinatorial optimization models and train the selected combinatorial optimization model using the constructed dataset 200, during the process of training the combinatorial optimization model.

The control unit 170 may selectively train the combinatorial optimization model based on the size of the graph included in the dataset 200. The control unit 170 may selectively train the combinatorial optimization model according to the size of the graph included in the dataset 200 based on predetermined criteria.

The predetermined criteria may be variously set based on the size of the graph. For example, the predetermined criteria may include at least one of the number of nodes and the number of edges, and a node-to-edge ratio (the density of the graph) that are included in the graph, a diameter of the graph (the difference between the farthest nodes in the graph), and a size of a connected component of the graph. However, the predetermined criteria may further include various criteria in addition to those mentioned above, and it is understood that the predetermined criteria may be variously set by the administrator of the combinatorial optimization system 100 according to the present disclosure or by the combinatorial optimization system 100 itself. Hereinafter, for convenience of description, the following description is given under the assumption that the predetermined criteria are set based on the number of nodes.

The control unit 170 may analyze the size of at least one graph included in the dataset 200 based on the predetermined criteria (e.g., the number of nodes is "500" or less) and specify any one of the combinatorial optimization models to be trained based on the size of the analyzed graph. Here, analyzing the size of the graph may also be understood as analyzing at least one of the graph, the terminal nodes, and the edge costs included in the grouped instances.

For example, when the analysis result shows that the size of the graph satisfies the predetermined criteria (indicating that the size of the graph is small), the control unit 170 may select the first artificial intelligence model 181 (or the first type of supervised learning model) included in the supervised learning model from among the combinatorial optimization models according to the present disclosure. Furthermore, the control unit 170 may train the first artificial intelligence model 181 using the dataset 200. The first artificial intelligence model 181 specified based on satisfying the predetermined criterion is effective in the small-sized graph and may provide practical inference time and high prediction performance.

For another example, when the analysis result shows that the size of the graph does not satisfy the predetermined criteria (indicating that the size of the graph is large), the control unit 170 may select the second artificial intelligence model 182 (or the second type of supervised learning model) included in the supervised learning model from among the combinatorial optimization models according to the present disclosure. Furthermore, the control unit 170 may train the second artificial intelligence model 182 using the dataset 200. The second artificial intelligence model 182 specified based on satisfying the predetermined criterion enables stable learning through high computational efficiency and parallel processing (or sampling), which is effective in the large graph and may derive efficient solutions even in large-scale, complex problems.

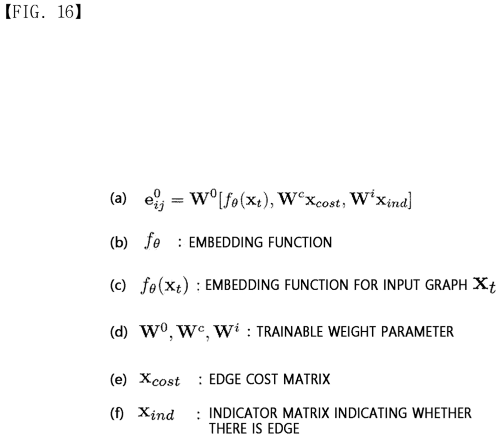

In this regard, the second artificial intelligence model 182 may formulate the NP-hard problem in the field of the combinatorial optimization as a {0, 1}-vector optimization problem and generate the high-quality solution. In the present disclosure, edge feature initialization in an anisotropic graph may be modified to integrate further detailed information related to the edge costs and terminal information. The modified edge feature initialization may be represented as illustrated in (a) of FIG. 16. The embedding function in (a) of FIG. 16 may be represented as illustrated in (b) of FIG. 16, and the embedding function for the input graph may be represented as illustrated in (c) of FIG. 16. In addition, each learnable weight parameter may be represented as illustrated in (d) of FIG. 16, and an edge cost matrix and an indicator matrix indicating the presence or absence of the edge may be represented as illustrated in (e) and (f) of FIG. 16, respectively. That is, in the present disclosure, by directly integrating edge cost information and terminal node indicators into an edge embedding vector, the second artificial intelligence model 182 may effectively determine the unique characteristics of the Steiner tree problem and derive a more accurate and cost-effective optimal solution.

Meanwhile, the solution to the Steiner tree problem is represented as a tree, and such a tree should be expressed sequentially. In the present disclosure, a tree traversal (or level-order tree traversal) method may be used to serialize the nodes of the tree. That is, in the present disclosure, the tree may be expressed as a node list by serializing the nodes of the tree through the tree traversal method.

When the number of child nodes in a tree is not limited to two, the nodes may be rearranged using level-order traversal, pre-order traversal, and post-order traversal.

The level-order traversal is also known as breadth-first search (BFS), and visits all children of the current node and then explores next-level nodes. In addition, the pre-order traversal is a depth-first search (DFS) scheme, and is explores nodes deeply and then visits sibling subtrees. The pre-order traversal is a method that gives priority to visiting the root before its children. Furthermore, the post-order traversal is a scheme that visits all the corresponding child nodes before each parent node.

In the present disclosure, the tree may be configured based on node indexes, the root may be designated as the finally arranged terminal node, and the child nodes may be arranged in descending order. Through this, in the present disclosure, it is possible to fix the location of the terminal to the most recent embedding and assign consistent labels.

Furthermore, conventionally, the arrangement of the nodes relies on lexicographic ordering, but in the present disclosure, nodes may be arranged based on the minimum distance to the terminal node. Nodes closer to the terminal have higher priority in the sequence, and this scheme may provide crucial information on nodes adjacent to the terminals prior to the decoding step.

In addition, in the present disclosure, various embedding or decoding methods (or techniques) may be utilized to apply the models having the autoregressive characteristics or non-autoregressive characteristics to the Steiner tree problem domain.

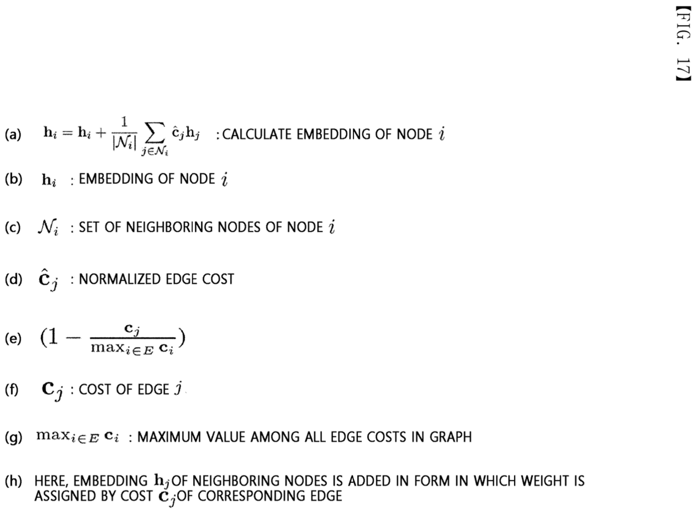

First, when the node is input to the model having the autoregressive characteristics, there may be a possibility that the node feature (distance to the terminal) used may omit the edge cost information or may not sufficiently reflect the overall topology (structure) of the graph. To prevent (or supplement) this, in the present disclosure, a graph neural network (GNN) embedding may be added to the node embedding. The embedding of node i may be calculated using the mathematical formula of (a) of FIG. 17. The embedding of node i may be represented as illustrated in (b) of FIG. 17, and the set of neighboring nodes of node i may be represented as illustrated in (c) of FIG. 17. In addition, (d) of FIG. 17 illustrates the normalized edge cost. In this case, the normalized edge cost may be defined as in (e) of FIG. 17. Furthermore, the maximum value among the edge costs in the entire graph may be represented as illustrated in (g) of FIG. 17. Here, the embeddings of the neighboring nodes may be added in a form in which they are weighted according to the cost of the corresponding edge (see (h) of FIG. 17).

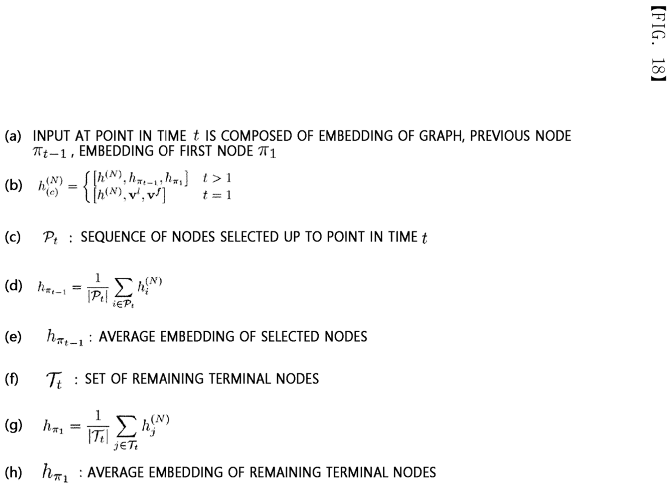

Next, the state of the Steiner tree problem may be expressed using a context embedding vector derived from a previously selected node and position encoding of the corresponding node. This vector may play an important role in summarizing the current state and guiding the selection of the next node of the model. This may induce the selection of the next node based on the attention mechanism. Specifically, as illustrated in (a) of FIG. 18, the input at point in time t may be composed of the embedding of the graph, the embedding of the previous node, and the embedding of the first node. In the present disclosure, the input may be modified as illustrated in (b) of FIG. 18. The sequence of nodes selected up to point in time t may be represented as illustrated in (c) of FIG. 18, and the average embedding of the selected nodes may be represented as illustrated in (d) and (e) of FIG. 18. The average embedding (or the average value of the embedding vector) of the selected nodes may provide the summary of the partial solution. The set of remaining nodes (terminals) excluding the selected nodes may be represented as illustrated in (f) of FIG. 18. The average embedding of the remaining terminal nodes may be represented as illustrated in (g) and (h) of FIG. 18, and these terminals may summarize the remaining objectives.

In this way, in the present disclosure, by adjusting the context embedding, the present disclosure enables the model having the autoregressive characteristics to effectively handle the Steiner tree problem. The adjustment reflects the remaining terminals that need to be connected to the current partial solution, thereby allowing the model to focus on the key aspects of the Steiner tree problem.

Furthermore, in the artificial intelligence (or neural network) model for the combinatorial optimization problem, it is necessary to decode the raw output of the neural network into the solution that satisfies the specific constraints of the combinatorial optimization problem.

Unlike the constraints of the general large-scale language models (LLM), the constraints in the combinatorial optimization problem are explicit and strict, and may specify feasible solutions to a specific combinatorial optimization task. For example, in the Steiner tree problem, i) all terminal nodes should be connected, ii) the selected set of edges should not form any cycles to maintain the tree structure, and iii) duplicated edges for connecting terminals should be excluded.

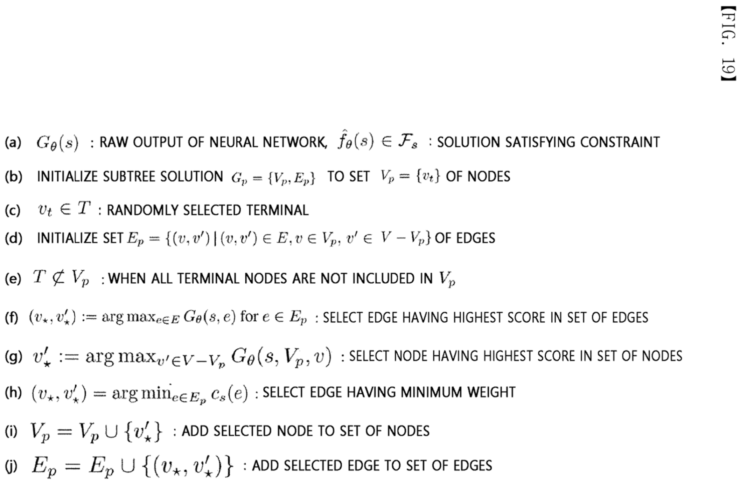

In the decoding process (or algorithm) for the Steiner tree according to the present disclosure, edges may be iteratively selected based on previously selected edges. In the present disclosure, initially, any terminal may be selected, and a graph including only the corresponding terminal may be defined as a partial solution. Thereafter, edges that may be added to the current partial solution may be defined as a set of candidate edges. Among these candidates, edges may be selected based on scores calculated from the raw output of the neural network. The raw output of the neural network and the feasible solution (a solution that satisfies constraints) may each be represented as illustrated in (a) of FIG. 19.

Furthermore, as illustrated in (b) of FIG. 19, during the decoding process, the partial tree solution may be initialized as a set of nodes. Here, the randomly selected terminal may be represented as in (c) of FIG. 19. In addition, as illustrated in (d) of FIG. 19, the set of edges is initialized, and when all terminal nodes are not included in Vp (see (e) of FIG. 19), the process described below is iteratively performed. In this case, for the non-autoregressive approach, the edge having the highest score is selected from the set of candidate edges (see (f) of FIG. 19). On the other hand, for the autoregressive approach, the node having the highest score is selected from the set of nodes (see (f) of FIG. 19). Furthermore, as illustrated in (h) of FIG. 19, the edge with the minimum weight is selected, and the selected node is added to the set of nodes, or the selected edge is added to the set of edges (see (i) and (j) of FIG. 19).

Meanwhile, during the inference process, when the input data related to the Steiner tree problem is input, the control unit 170 may perform inference on the Steiner tree problem using any one of the pre-trained combinatorial optimization models.

The combinatorial optimization model according to the present disclosure may be applied to various industries and services. For example, as illustrated in FIG. 1, at least one combinatorial optimization model according to the present disclosure may be utilized in a PCB design system that generates an optimal solution (i.e., an optimal wiring path) that satisfies various constraints (e.g., wiring prohibited area, wiring width and spacing, wiring angle, multi-layer wiring, etc.) required for PCB design, or explores the shortest path to wire the terminals at the lowest cost based on PCB data input by a user.

In this case, the control unit 170 may perform the inference on the Steiner tree problem using the artificial intelligence model (e.g., the fourth artificial intelligence model 184) having the non-autoregressive characteristics among the reinforcement learning models included in the combinatorial optimization model.

**In an embodiment,** when PCB data 200 including a net list 210, terminal information 220, and constraint information 230 is input from a user terminal 10 through a service page 1000, the control unit 170 may perform inference on PCB design, which belongs to a Steiner tree problem domain, by using a fourth artificial intelligence model 184. The fourth artificial intelligence model 184 may derive an optimal solution (or an optimal path) that wires the terminals (nodes) defined in the net list at a minimum cost while satisfying the constraints according to the PCB data.As described above, according to the method of generating training data and the method of training a combinatorial optimization model using the same, by generating the large-scale dataset that includes various scenarios such as the graphs, the number of terminal nodes, the data sizes, and the edge distributions, it is possible to provide the environment in which the artificial intelligence model may interact with various scenarios and may be trained.

In addition, according to the method of generating training data and the method of training a combinatorial optimization model using the same according to the present disclosure, by providing the dataset or learning environment that can be universally utilized in various learning environments, it is possible to provide the optimal environment in which various types of models with respectively different characteristics may learn the Steiner tree problem (STP).

Furthermore, according to the method of generating training data and the method of training a combinatorial optimization model using the same according to the present disclosure, by constructing the large-scale, high-quality dataset that can be utilized in various learning environments and training the artificial intelligence models using the constructed dataset, it is possible to improve the generalization performance of the artificial intelligence model that solves the Steiner tree problem.

In addition, according to the method of generating training data and the method of training combinatorial optimization model using the same according to the present disclosure, by selectively training the artificial intelligence model according to the size of the graph included in the dataset, it is possible to minimize the costs and resource usage required for the model training and inference and to universally respond to various sizes of graphs. As a result, it is possible to provide the optimal solutions tailored to various sizes of graphs and maximize the performance and efficiency by utilizing the strengths of each model.

Furthermore, according to the method of generating training data and the method of training combinatorial optimization model using the same according to the present disclosure, by training the combinatorial optimization model using the constructed dataset so as to reinforce the expressiveness for the partial solutions, it is possible to solve the Steiner tree problem that relies on the partial solution information and significantly improve the potential of utilization in the combinatorial optimization model. As a result, it is possible for the combinatorial optimization model to alleviate smoothing issues and derive more accurate solutions on the large-scale instances.

That is, according to the method of generating training data and the method of training a combinatorial optimization model using the same according to the present disclosure, by providing the large-scale dataset including accurate optimal solutions and the learning environment, it is possible to provide the environment capable of solving the complex combinatorial optimization problems in various industries, services, researches, etc.

Meanwhile, as described above, the present disclosure may be implemented as a program that is executed by one or more processes on a computer and stored on a computer-readable medium (or recording medium).

Furthermore, as described above, the present disclosure may be implemented as computer-readable codes or instructions on a medium recording the program. That is, the present disclosure may be provided in the form of the program.

Meanwhile, the computer readable medium may include all kinds of recording devices in which computer system-readable data is stored. An example of the computer readable medium may include a hard disk drive (HDD), a solid state disk (SSD), a silicon disk drive (SDD), a read only memory (ROM), a random access memory (RAM), a compact disk read only memory (CD-ROM), a magnetic tape, a floppy disk, an optical data storage, and the like.

Furthermore, the computer-readable medium may be the server or cloud storage that includes storage and may be accessed by the electronic device via communication. In this case, the computer may download the program according to the present disclosure from the server or cloud storage via wired or wireless communication.

Furthermore, in the present disclosure, the computer described above is an electronic device equipped with a processor, i.e., a central processing unit (CPU), and there are no particular limitations on its type.

Meanwhile, the above-described detailed description is to be interpreted as being illustrative rather than being restrictive in all aspects. The scope of the present disclosure is to be determined by reasonable interpretation of the claims, and all modifications within an equivalent range of the present disclosure fall in the scope of the present disclosure.

## Claims

1. A method of generating training data for learning a Steiner tree problem, comprising:
generating a graph based on a plurality of graph types and parameters until nodes in the graph are connected by edges;
generating an instance of the Steiner tree problem by adding the generated graph to a dataset;
deriving an optimal solution to the instance using a specific solver; and
constructing a dataset including the instance and the optimal solution.

2. The method of claim 1, wherein, in the generating of the graph, when there is a separated node, the graph is iteratively generated so that the nodes are connected in all graphs.

3. The method of claim 2, wherein the graph is generated based on the number of instances.

4. The method of claim 1, wherein the node in the graph is selected as a terminal based on a predetermined probability, and
a cost of the edges is assigned as a random integer from a truncated Gaussian distribution.

5. The method of claim 4, wherein the graph, the terminal, and the cost of the edge are grouped in the instance and included in the dataset.

6. The method of claim 1, wherein a connection scheme of the edge varies depending on the plurality of graph types.

7. The method of claim 6, wherein a graph corresponding to at least one of the plurality of graph types is generated by sampling an edge generation probability from a uniform distribution, sampling a degree of the graph, or sampling an average node degree.

8. The method of claim 7, wherein the plurality of graph types include a type different from at least one of the graph types, and
the different type of graph is generated with the cost of the edge fixed.

9. A method of training a combinatorial optimization model (neural combinatorial optimization) for solving a Steiner tree problem, comprising:
generating a graph based on a plurality of graph types and parameters until nodes in the graph are connected by edges;
generating an instance of the Steiner tree problem by adding the generated graph to a dataset;
deriving an optimal solution to the instance using a specific solver; and
constructing a dataset including the instance and the optimal solution, and training at least one of combinatorial optimization models using the constructed dataset.

10. The method of claim 9, wherein, in the generating of the graph, when there is a separated node, the graph is iteratively generated so that the nodes are connected in all graphs.

11. The method of claim 10, wherein the graph is generated based on the number of instances.

12. The method of claim 9, wherein the node in the graph is selected as a terminal based on a predetermined probability, and
a cost of the edges is assigned as a random integer from a truncated Gaussian distribution.

13. The method of claim 12, wherein the graph, the terminal, and the cost of the edge are grouped in the instance and included in the dataset.

14. The method of claim 9, wherein the combinatorial optimization model includes at least one of a supervised learning model and a reinforcement learning model.

15. The method of claim 14, wherein the supervised learning model and the reinforcement learning model are each classified into a plurality of model types based on autoregressive and non-autoregressive characteristics.

16. The method of claim 15, further comprising:
performing inference on the Steiner tree problem using an artificial intelligence model having the non-autoregressive characteristics among the reinforcement learning models.

17. The method of claim 9, wherein, in the training, any one of the combinatorial optimization models is selected based on a size of the graph, and the selected combinatorial optimization model is trained using the constructed dataset.

18. A program executed by one or more processes in an electronic device and stored in a computer-readable recording medium,
wherein the program includes instructions for performing:
generating a graph based on a plurality of graph types and parameters until nodes of the graph are connected by edges;
generating an instance for a Steiner Tree Problem by adding the generated graph to a data set;
deriving an optimal solution for the instance by using a specific solver; and
constructing a data set including the instance and the optimal solution.
